(19) Europäisches Patentamt / European Patent Office / Office européen des brevets

(11) **EP 4 376 114 B1**

(12) **EUROPEAN PATENT SPECIFICATION**

(45) Date of publication and mention of the grant of the patent:
**15.04.2026 Bulletin 2026/16**

(21) Application number: **23196135.0**

(22) Date of filing: **08.09.2023**

(51) International Patent Classification (IPC):
$H01M\ 4/13^{(2010.01)}$  $H01M\ 10/052^{(2010.01)}$
$H01M\ 10/0567^{(2010.01)}$  $H01M\ 4/38^{(2006.01)}$
$H01M\ 4/62^{(2006.01)}$  $H01M\ 4/02^{(2006.01)}$

(52) Cooperative Patent Classification (CPC):
H01M 4/13; C01B 32/00; H01M 4/02; H01M 4/0404;
H01M 4/133; H01M 4/136; H01M 4/1397;
H01M 4/36; H01M 4/362; H01M 4/364;
H01M 4/366; H01M 4/38; H01M 4/382;
H01M 4/5815; H01M 4/583;  (Cont.)

(54) **POSITIVE ELECTRODE ACTIVE MATERIAL, LITHIUM-SULFUR BATTERY COMPRISING THE SAME AND MANUFACTURING METHOD THEREOF**

POSITIVELEKTRODENAKTIVMATERIAL, LITHIUM-SCHWEFEL-BATTERIE DAMIT UND HERSTELLUNGSVERFAHREN DAFÜR

MATÉRIAU ACTIF D'ÉLECTRODE POSITIVE, BATTERIE AU LITHIUM-SOUFRE LE COMPRENANT ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: 25.11.2022 KR 20220159965
23.12.2022 KR 20220183771
23.12.2022 KR 20220183586
27.12.2022 KR 20220185613
16.05.2023 KR 20230063394
31.05.2023 KR 20230070299
07.06.2023 KR 20230073163
13.06.2023 KR 20230075765

(43) Date of publication of application:
**29.05.2024 Bulletin 2024/22**

(73) Proprietor: **LG Energy Solution, Ltd.**
**Seoul 07335 (KR)**

(72) Inventors:
• **KANG, Da-Young**
**34122 Daejeon (KR)**
• **KIM, Min-Su**
**34122 Daejeon (KR)**
• **KIM, Bong-Soo**
**34122 Daejeon (KR)**
• **YANG, Seung-Bo**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2022/181447  KR-A- 20200 100 962
KR-B1- 101 737 217  US-A1- 2022 367 873

(52) Cooperative Patent Classification (CPC): (Cont.)
**H01M 4/587; H01M 4/60; H01M 4/62; H01M 4/622;**
**H01M 4/625; H01M 10/052; H01M 10/0525;**
**H01M 10/0567;** C01B 32/158; C01B 2202/06;
C01P 2004/50; C01P 2006/11; H01M 2004/021;
H01M 2004/028; H01M 2300/0025; Y02E 60/10

**Description**

TECHNICAL FIELD

The present disclosure relates to a positive electrode, and a lithium-sulfur battery comprising the same with high energy density.

BACKGROUND ART

As energy storage technology has been given an increasing attention, the range of applications has been extended to energy for mobile phones, tablets, laptops and camcorders, and even to electric vehicles (EV) and hybrid electric vehicles (HEV), and research and development of electrochemical devices are gradually increasing. In this aspect, electrochemical devices are attracting great attention, and especially the development of secondary batteries including lithium-sulfur batteries that can charge/discharge is the center of attention, and recently, in the development of batteries, research and development for new design of electrodes and batteries is being made to improve the capacity density and specific energy.

Among electrochemical devices, lithium-sulfur (LiS) batteries are attaining attention as nextgeneration secondary batteries that can replace lithium ion batteries due to high energy density. Lithium-sulfur is used for positive electrode active materials, and in lithium-sulfur batteries, reduction reaction of sulfur and oxidation reaction of lithium metal occurs during discharging, and in this instance, sulfur forms lithium polysulfide ($Li_2S_2$, $Li_2S_4$, $Li_2S_6$, $Li_2S_8$) of a linear structure from $S_8$ of a ring structure, and lithium-sulfur batteries show a gradual discharge voltage until polysulfide (PS) is completely reduced to $Li_2S$.

In the lithium-sulfur batteries, when carbon materials having high specific surface area and high porosity, for example, carbon nanotubes, are used as sulfur hosts, it is possible to achieve high energy density and life characteristics, but additional research is needed to achieve adequate energy density and life characteristics for commercialization.

Attempts have been made to increase the loading of the positive electrode active material, sulfur, in order to increase the energy density, but since sulfur is non-conductive, as the sulfur content increases, reactivity decreases and energy density reduces.

KR 2020 0100962 A discloses a positive electrode for a lithium secondary battery containing a sulfur-montmorillonite composite as a positive electrode active material, and a lithium secondary battery including the same.

US 2022/367873 A1 discloses a positive electrode for a lithium-sulfur battery, including a current collector; and a positive electrode active material layer on the current collector, wherein the positive electrode active material layer includes a positive electrode active material and a binder, and the positive electrode active material layer has surface properties defined by the following Sa (arithmetic mean surface roughness of the positive electrode) and Sz (maximum height roughness of the positive electrode) ((i) 1 $\mu$m≤Sa≤5 $\mu$m, (ii) 10 $\mu$m≤Sz≤60 $\mu$m (wherein Sa is the average value of the distance from the middle surface of the surface irregularity structure of the positive electrode to the highest point and the lowest point of each irregularity part, and Sz means the distance from the lowest point to the highest point of the positive electrode)) and a method for manufacturing the same.

KR 101 737 217 B1 discloses a sulfur-carbon nanotube composite, a production method thereof, a cathode active material for a lithium-sulfur battery comprising the same, and a lithium-sulfur battery comprising the same.

WO 2022/181447 A1 discloses a carbon material having a circularity of more than 0.83 and a specific surface area of not less than 400 $m^2$. The carbon material is produced by a production method includes: providing a suspension containing first carbon particles having a specific surface area of not less than 50 $m^2$/g, a water-soluble binder, and water: obtaining granular bodies from the suspension; and subjecting the granular bodies to heat treatment to obtain second carbon particles.

DISCLOSURE

Technical Problem

The present invention aims to overcome drawbacks of the prior art, especially is directed to providing a lithium-sulfur battery with high loading and high energy density.

It will be easily understood that these and other objectives and advantages of the present disclosure may be realized by means or methods set forth in the appended claims and a combination thereof.

Technical Solution

The above problem is solved in accordance with the subject matter of the independent claims. Further embodiments result from the sub-claims and the following written description.

To solve the above-described problem, according to an aspect of the present disclosure, there is provided a positive electrode of the following embodiments.

The positive electrode according to a first embodiment comprises a current collector; and a positive electrode active material layer on at least one surface of the current collector, wherein the positive electrode active material layer comprises a sulfur-carbon composite and a binder polymer, the sulfur-carbon composite comprises a porous carbon material, and a sulfur-based material, the sulfur-based material is located on at least a part of the porous carbon material, an amount of the sulfur (S) is 65 wt% or more and 90 wt% or less based on a total 100 wt% of the positive electrode active material layer, and a porosity of the positive electrode is more than 80 vol%.

According to a second embodiment, in the first embodiment, a tap density of the porous carbon material may be 0.09 g/cm$^3$ or less.

According to a third embodiment, in any of the first to the second embodiment, the porous carbon material is formed of particles and the particles may have a particle shape uniformity according to the following Equation 1 of 1.3 or less and 1.0 or more:

$$\text{Particle shape uniformity = average diameter of a circumscribed circle of the particles/average diameter of an inscribed circle of particles.} \qquad \text{[Equation 1]}$$

According to a fourthembodiment, in any one of the first to third embodiments, the porosity of the positive electrode may be 81 vol% or more and 85 vol% or less.

According to a fifth embodiment, in any one of the first to fourth embodiments, the porous carbon material may comprise a secondary structure of agglomerated primary structures, wherein the primary structures are carbon nanotubes.

According to an sixth embodiment, in any one of the first to fifth embodiments, the sulfur-carbon composite may have a botryoidal texture.

According to a seventh embodiment, in any one of the first to eighth embodiments, a tap density of the porous carbon material may be 0.07 g/cm$^3$ or less.

According to a eighth embodiment, in any one of the first to seventh embodiments, the amount of the sulfur (S) may be 65 wt% or more and 75 wt% or less based on the total 100 wt% of the positive electrode active material layer.

According to a ninth embodiment, there is provided a positive electrode, comprising:

a current collector; and a positive electrode active material layer on at least one surface of the current collector, wherein

- the positive electrode active material layer comprises a sulfur-carbon composite and a binder polymer,
- the sulfur-carbon composite comprises a porous carbon material, and a sulfur-based material,

the sulfur-based material is located on at least a part of the of the porous carbon material,

- an amount of the sulfur (S) is 65 wt% or more and 90 wt% or less based on a total 100 wt% of the positive electrode active material layer, and

the porous carbon material is formed of particles has and the particles have a particle shape uniformity according to the following Equation 1of 1.3 to 1:

$$\text{Particle shape uniformity = average diameter of a circumscribed circle of the particle /average diameter of an inscribed circle of the particles.} \qquad \text{[Equation 1]}$$

According to a tenth embodiment, in the ninth embodiment, a tap density of the porous carbon material may be 0.09 g/cm$^3$ or less.

According to a eleventh embodiment, in any of the first to the tenth embodiment, the porous carbon material may be prepared by centrifugal milling, preferably using a centrifugal grinder operated with an angular velocity 30 rad/s or more and 125 rad/s or less, and sieving, preferably with a sieve having a mesh size of 50 μm or more and 100 μm or less.

According to a twelfth embodiment, in any of the first to the eleventh embodiment, the porous carbon material may have a broadness factor (BF) of 4 or more and 7 or less, wherein the broadness factor is the ratio ($D_{90}/D_{10}$) of the particle size $D_{90}$ to the particle size $D_{10}$ of the porous carbon material.

According to an thrteenth embodiment, in any of the first to the twelfth embodiment, the sulfur-carbon composite may be obtainable by mixing the porous carbon material and the sulfur-based material and subsequentially heating the mixed porous carbon material and sulfur-based material at a temperature of 120°C or more.

According to another aspect of the present disclosure, there is provided a lithium-sulfur battery of the following embodiments.

The lithium-sulfur battery according to a fourteenth embodiment comprises the positive electrode according to any one of the first to eighteenth embodiments; a negative electrode; and a separator interposed between the positive electrode and the negative electrode; and an electrolyte.

According to a fifteenth embodiment, in the fouteenth embodiment, a weight ratio (El/S weight ratio) of the electrolyte and sulfur (S) in the sulfur-carbon composite in the lithium-sulfur battery may be 3.5 g/g or less.

According to a sixteenth embodiment, in the fourteenth or fifteenth embodiment, the lithium-sulfur battery may have an energy density of 400 Wh/kg or more.

According to a seventeenth embodiment, in any of the fourteenth to the sixteenth embodiment, the electrolyte comprises a $LiNO_3$.

According to a eighteenth embodiment, in any of the fourteenth to the sixteenth embodiment, the lithium-sulfur battery is a pouch cell lithium-sulfur battery, a coin cell lithium-sulfur battery or a cylindrical cell lithium-sulfur battery.

<u>Advantageous Effects</u>

According to an aspect of the present disclosure, it may be possible to provide the positive electrode for the lithium-sulfur battery with high loading of the positive electrode active material, sulfur, and the lithium-sulfur battery comprising the same. **In** particular, according to the present disclosure, it may be possible to provide the lithium-sulfur battery with high loading of the positive electrode active material, sulfur, and improved energy density by maintaining and improving electrochemical reactivity of sulfur.

<u>DESCRIPTION OF DRAWINGS</u>

FIG. 1 is a specific capacity evaluation graph of lithium-sulfur batteries according to comparative examples 1, 2 and 4 in the present disclosure.

FIG. 2 is a specific capacity evaluation graph of lithium-sulfur batteries according to comparative example 1 and examples 1 and 2 in the present disclosure.

FIG. 3 is a graph showing the relative energy density of lithium-sulfur batteries according to examples 1 and 2 and comparative examples 1 to 3.

FIG. 4A is an SEM image of the porous carbon material used to measure the particle shape uniformity of the porous carbon material used in Comparative Example 4 in the present specification. The crossed arrows in the image represent the long and short axis used to measure length, respectively.

FIG. 4B is an SEM image of the porous carbon material used to measure the particle shape uniformity of the porous carbon material used in Example 1 of the present specification. The crossed arrows in the image represent the long and short axis used to measure length, respectively.

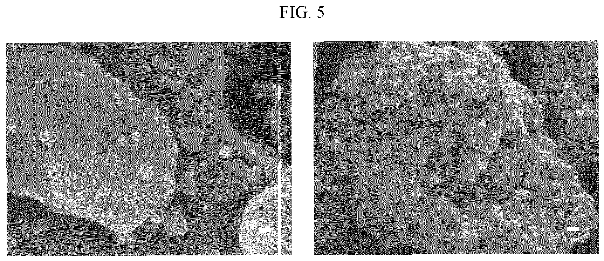

FIG. 5 is a SEM image (left) showing that the surface of the porous carbon material of Comparative Example 1 is relatively flat and a SEM image (right) showing that the surface of the porous carbon material of Example 1 is relatively rough. It shows.

<u>BEST MODE</u>

Hereinafter, the present disclosure will be described in detail.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Unless otherwise restricted, a detailed description defining or specifying the elements may be applied to all inventions and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

The term "include", "comprise" or "have" when used in this specification, specifies the presence of stated elements, but does not preclude the presence or addition of one or more other elements, unless the context clearly indicates otherwise. However, unless explicitly stated otherwise, "comprising" or "including" or the like includes "consisting of".

Additionally, the terms "about" and "substantially" as used herein are used in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the specification, "A and/or B" refers to either A or B or both.

The term "composite" as used herein refers to a material with physically·chemically different phases and more effective functions, formed by combining two or more materials.

**In** the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mino II.

The term "polysulfide" as used herein is the concept that covers "polysulfide ion ($S_x^{2-}$, x = 8, 6, 4, 2))" and "lithium polysulfide ($Li_2S_x$ or $LiS_x^-$, x = 8, 6, 4, 2)".

The term "porosity" as used herein refers to a fraction of voids in a structure over the total volume and is indicated in vol%, and may be used interchangeably with void fraction, degree of porosity or the like.

**In** the present disclosure, "particle size $D_{10}$" refers to a particle size at 10% of cumulative volume particle size distribution of particles, "particle size $D_{50}$" refers to a particle size at 50% of cumulative volume particle size distribution of particles, and "particle size $D_{90}$" refers to a particle size at 90% of cumulative volume particle size distribution of particles. That is, for example, The average particle size (D50) may be the median diameter or the medium value of the particle size distribution, that is, the value of the particle diameter at 50% in the cumulative distribution. The particle size means the particle diameter. The particle diameter may refer to the longest distance of opposed surfaces of the particle.

Each particle size $D_{10}$, $D_{50}$ and $D_{90}$ may be measured using a laser diffraction method. For example, each particle size $D_{10}$, $D_{50}$ and $D_{90}$ may be measured by dispersing a target particle powder in a dispersion medium, introducing into a commercially available laser diffraction particle size measurement apparatus (for example, Microtrac MT 3000), irradiating ultrasound of about 28 kHz with an output of 60W to acquire a cumulative volume particle size distribution graph, and determining the particle size corresponding to each of 10%, 50% and 90% of the cumulative volume distribution.

The present disclosure provides a positive electrode for use in an electrochemical device and an electrochemical device comprising the same. In the present disclosure, the electrochemical device may include any device that causes electrochemical reaction. Specific examples may include any type of primary battery, secondary battery, fuel cell, solar cell or capacitor such as super capacitor. In particular, the electrochemical device may be a secondary battery, and the secondary battery may be a lithium ion secondary battery. The lithium ion secondary battery may include, for example, a lithiummetal battery, a lithium-sulfur battery, an all solid state battery, a lithium polymer battery or the like, and preferably a lithium-sulfur battery.

It is known that the conventional lithium-sulfur batteries have a low energy density disadvantage. To address the disadvantage, carbon materials having high specific surface area and porosity, for example, carbon nanotubes have been used as hosts for sulfur-based materials to achieve relatively high energy density and life characteristics, but commercialization is still challenging. Additionally, it is necessary to increase the loading of the sulfur-based materials in sulfur-carbon composites included in the positive electrode to increase the energy density of the lithium-sulfur batteries, but since the sulfur-based materials have no or little conductivity, the higher loading, the lower reactivity of the positive electrode.

According to an aspect of the present disclosure, there is provided a positive electrode in which sulfur ($S_8$) or another sulfur-based material is loaded onto a porous carbon material which is preferably shape modified to increase sulfur loading and electrical conductivity in the positive electrode, thereby improving electrical conductivity, and a lithium-sulfur battery with improved energy density.

The positive electrode according to an aspect of the present disclosure comprises a current collector; and a positive electrode active material layer on at least one surface of the current collector.

Specifically, the positive electrode active material layer comprises a sulfur-carbon composite and preferably a binder polymer, and the sulfur-carbon composite comprises a porous carbon material, and a sulfur-based material. The sulfur-based material is located on at least a part of the porous carbon material. In this regard, the surface of the porous carbon material encompasses any surface accessible für deposition of the sulfur-based material during preparation of the sulfur-carbon composite, especially encompasses or may be the inner pores and outer surfaces of the porous carbon material. That is, especially, the sulfur-based material may be loaded onto at least one of the inside of pores of the porous carbon material or the outer surface of the porous carbon material.

According to the present disclosure, the porous carbon material comprises or is formed of particles, that is, is in a particulate from.

The present disclosure is characterized in that the porous carbon material has a specific range of particle sizes.

In this instance, the present disclosure is characterized in that the amount of the sulfur (S) is 65 wt% or more and 90 wt% or less based on the total 100 wt% of the positive electrode active material layer, and the porosity of the positive electrode is more than 80 vol%.

That is, according to an aspect of the present disclosure, the use of porous carbon material which is preferably shape modified may increase the sulfur loading in the positive electrode active material and ensure the porosity of the positive electrode.

In the conventional lithium-sulfur batteries, when a very large amount of sulfur-based material is included in the positive electrode active material layer, the reactivity of the positive electrode decreases, so it was difficult to include the sulfur-based material in an amount of 60 wt% or more based on the total 100 wt% of the positive electrode active material layer.

Specifically, the positive electrode according to an aspect of the present disclosure may comprise 65 wt% or more of the sulfur-based material based on the total 100 wt% of the positive electrode active material layer and the positive electrode may have a porosity of 80 vol% or more.

Further described herein is a positive electrode, comprising:

a current collector; and a positive electrode active material layer on at least one surface of the current collector, wherein

- the positive electrode active material layer comprises a sulfur-carbon composite and a binder polymer,
- the sulfur-carbon composite comprises a porous carbon material, and a sulfur-based material,

the sulfur-based material is located on at least a part of the of the porous carbon material,

- an amount of the sulfur (S) is 65 wt% or more and 90 wt% or less based on a total 100 wt% of the positive electrode active material layer, and
- a tap density of the porous carbon material is 0.09 g/cm$^3$ or less.

Further described herein is a positive electrode, comprising:

a current collector; and a positive electrode active material layer on at least one surface of the current collector, wherein

- the positive electrode active material layer comprises a sulfur-carbon composite and a binder polymer,
- the sulfur-carbon composite comprises a porous carbon material, and a sulfur-based material,

the sulfur-based material is located on at least a part of the of the porous carbon material,

- an amount of the sulfur (S) is 65 wt% or more and 90 wt% or less based on a total 100 wt% of the positive electrode active material layer, and

the porous carbon material is formed of particles has and the particles have a particle shape uniformity according to the following Equation 1of 1.3 to 1:

Particle shape uniformity = average diameter of a circumscribed circle of the particle /average diameter of an inscribed circle of the particles.      [Equation 1]

Further described herein is a positive electrode, comprising:

a current collector; and a positive electrode active material layer on at least one surface of the current collector, wherein

- the positive electrode active material layer comprises a sulfur-carbon composite and a binder polymer,
- the sulfur-carbon composite comprises a porous carbon material, and a sulfur-based material,

the sulfur-based material is located on at least a part of the porous carbon material,

- an amount of the sulfur (S) is 65 wt% or more and 90 wt% or less based on a total 100 wt% of the positive electrode active material layer, and

a ratio of a thickness of the positive electrode active material layer to an amount of carbon per unit area of 1 cm × 1 cm of the positive electrode active material layer is 80 $\mu$m/g or more and 130 $\mu$m/g or less.

In an embodiment of the present disclosure, the sulfur-based material may include, without limitation, any material that provides sulfur ($S_8$) as the active material of the lithium-sulfur battery. For example, the sulfur-based material comprises at least one of sulfur ($S_8$) or a sulfur compound.

In an embodiment of the present disclosure, the sulfur-based material may comprise at least one selected from the group consisting of a disulfide compound comprising at least one of inorganic sulfur ($S_8$), $Li_2S_n$ ($n\geq1$),; an organic sulfur compound, preferably 2,5-dimercapto-1,3,4-thiadiazole or 1,3,5-trithiocyanuic acid; and a carbon-sulfur polymer (($C_2S_x)_n$, x=2.5 to 50, $n\geq2$). In an embodiment of the present disclosure, the sulfur-based material may be inorganic sulfur ($S_8$).

In an embodiment of the present disclosure, the sulfur-based material may be included in the sulfur-carbon composite by physical adsorption with the porous carbon material, especially at the surface thereof, or chemical bond such as covalent bond or Van der Waals bond between sulfur (S) and carbon in the porous carbon material, especially chemical bond with the surface thereof.

In the sulfur-carbon composite according to the present disclosure, the sulfur-based material is present on at least a part of the surface of the porous carbon material, that is, may be present in at least one of the inside of the pores of the carbon material or the outer surface of the carbon material, and in this instance, may be present in an area of less than 100% of the total surface of the porous carbon material including the inside and outer surface of the porous carbon material, preferably 1 to 95%, and more preferably 60 to 90%. When sulfur is present on the surface of the porous carbon material within the above-described range, it may be possible to obtain the maximum effect in terms of electron transport area and electrolyte wetting. Specifically, when sulfur is impregnated onto the surface of the carbon material uniformly to a small thickness at the area of the above-described range, it may be possible to increase the electron transport contact area during charging·discharging. In case that sulfur is present in the area corresponding to 100% of the entire surface of the carbon material, the carbon material is completely covered with sulfur, resulting in poor electrolyte wetting and low contact with a conductive material included in the electrode, thereby failing to accept electrons and participate in reaction.

In an embodiment of the present disclosure, the amount of the sulfur (S) may be 65 wt% or more, for example 65 to 80 wt%, 65 to 75 wt%, 65 to 70 wt%, or 70 to 75 wt% based on the total 100 wt% of the positive electrode active material layer. For example, the amount of the sulfur (S) may be 67.2 to 72 wt% based on the total 100 wt% of the positive electrode active material layer. When the amount of the sulfur (S) is in the above-described range, it may be possible to improve the capacity of the battery using the same and the stability of the battery, but the present disclosure is not limited thereto.

In an embodiment of the present disclosure, the porous carbon material may have shape modification of porous carbon materials commonly used in lithium-sulfur batteries. Preferably, the porous carbon material has a grain shape which is angular to sub-angular. More preferred, the grain shape of the porous carbon material has a prismoidal sphericity.

A ratio of a thickness of the positive electrode active material layer to an amount of carbon per unit area of 1 cm × 1 cm of the positive electrode active material layer is 80 $\mu$m/g or more and 130 $\mu$m/g or less, preferably 80 or more and 130 or less. The parameter thickness per amount of carbon per unit area of 1 cm × 1 cm can be calculated by measuring the amount of carbon per unit area wherein the unit area is 1 cm times 1 cm and the thickness of the positive electrode active material layer based on the lowest thickness of the positive electrode active material layer.

The ratio of a thickness of the positive electrode active material layer to an amount of carbon in the positive electrode active material layer per unit area can be determined from a pristine (un-used) positive electrode. Alternatively, the amount of carbon per unit area of the positive electrode active material layer and the thickness of the positive active material layer may each be measured after the electrode has been discharged at least once. In later case, the electrode preferably has a capacity retention rate of 97% or more of the initial capacity, but the present invention is not limited thereto.

Specifically, it may be preferable to measure the thickness of the positive electrode active material layer in a charged state in aspect of measurement accuracy. For example, the ratio of a thickness of the positive electrode active material layer to an amount of carbon in the positive electrode active material layer can be determined in the state of charge of 97% or more, such as SOC 100. Alternatively, the amount of carbon per unit area of the positive electrode active material layer and the thickness of the positive active material layer may be measured based on the cycle at which the thickness of the positive active material layer is lowest.

The ratio of a thickness of the positive electrode active material layer to an amount of carbon in the positive electrode active material layer per unit area can be determined from the electrode loading (mAh/cm$^2$) by calculating the weight of carbon per electrode loading and calculating the thickness of the positive electrode active material layer.

The electrode loading can be calculated from the amount of sulfur in the entire electrode.

Alternatively, the ratio of a thickness of the positive electrode active material layer to an amount of carbon in the positive electrode active material layer per unit area can be determined directly by analyzing the amount of carbon in an unit area and the electrode thickness.

In another embodiment of the present invention, the ratio of the thickness of the positive electrode active material layer to the weight of carbon per unit area of the positive active material layer is determined by a method of directly analyzing the carbon content per unit area of the positive electrode active material layer and the method of measuring thickness of the electrode. Here, methods for directly analyzing the carbon content per unit area include, for example, known elemental analysis methods such as ICP-OES analysis, EA analysis, and ICP analysis, but the measurement method is not limited thereto. In addition, the method of measuring the thickness of the electrode is to measure the entire thickness of the positive electrode using a known thickness gauge, for example, a thickness gauge from Mitutoyo, and subtract the thickness of the current collector to measure the thickness of the positive electrode active material layer. It may be measuring thickness, but the measurement method is not limited to this.

In one embodiment of the present invention, the amount of carbon per unit area of the positive electrode active material layer represents the total amount of carbon, including a) carbon derived from the sulfur-carbon composite in the positive electrode active material layer, and b) carbon derived from the binders and/or conductive materials that may be included in the positive electrode active layer, but excluding the current collector from the positive electrode to be measured.

Therefore, in one embodiment of the present invention, when the composition of the positive electrode and the content of the sulfur-based material in the sulfur-carbon composite are known, the weight of carbon per unit area of the positive electrode active material layer can be directly calculated from the loading amount.

Meanwhile, in a lithium-sulfur battery, the thickness of the positive electrode may vary depending on repeated charging/discharging of the battery. Therefore, in order to measure the ratio of the thickness of the positive electrode active material layer to the weight of carbon per unit area of the positive active material layer, conditions for the number of charge/discharge repetitions (cycle) and/or state of charge (SOC) may be required. While discharging a battery, discharge products are generated inside the structure of the porous carbon material present in the positive electrode active material layer, so it may be difficult to accurately measure the thickness of the positive electrode without excluding the discharge products. Therefore, the thickness of the positive electrode active material layer may be measured based on the state of charge, for example, when SOC is 97% to 100%, preferably when SOC is 100%.

The porous carbon material may comprise or consist of any carbon-based material having porous and conductive properties commonly used in the corresponding technical field. For example, the porous carbon material may comprise at least one selected from the group consisting of graphite; graphene; carbon black including denka black, acetylene black, ketjen black, channel black, furnace black, lamp black, thermal black; carbon nanotubes (CNT) including single-walled carbon nanotubes (SWCNT) and multi-walled carbon nanotubes (MWCNT); carbon fibers including graphite nanofibers (GNF), carbon nanofibers (CNF) and activated carbon fibers (ACF); graphite including natural graphite, artificial graphite and expandable graphite; carbon nanoribbon; carbon nanobelt, carbon nanorod and activated carbon.

In an embodiment of the present disclosure, the porous carbon material may comprise or consist of carbon nanotubes. The carbon nanotube is a tube made of carbons connected in hexagonal shape. According to an embodiment of the present disclosure, the carbon nanotubes may be single-walled carbon nanotubes (SWCNT), multi-walled carbon nanotubes (MWCNT) or a combination thereof according to the number of layers of carbon atoms (referred to as 'carbon walls') of which the carbon nanotubes are made. Here, the length of the respective carbon nanotube is not particularly limited.

In an embodiment of the present disclosure, the porous carbon material may comprise or consist of carbon nanotubes, specifically multi-walled carbon nanotubes (MWCNT) to improve the sulfur loading, but the present disclosure is not limited thereto.

In an embodiment of the present disclosure, the porous carbon material may comprise a secondary structure formed by agglomeration of primary structures or carbon nanotubes. In one embodiment, the porous carbon material may have a secondary structure formed by agglomeration of agglomerated primary structures, wherein the primary structures are carbon nanotubes.

In another embodiment of the present disclosure, the carbon nanotubes may comprise or consist of two or more carbon nanotubes entangled in close contact with each other by the cohesive force between them. Specifically, in an embodiment of the present disclosure, the carbon nanotubes may be provided in the form of a carbon nanotube dispersion in which single strands are dispersed in a dispersion medium, or a secondary structure formed by agglomeration of carbon nanotubes of primary structure.

In this aspect, when the porous carbon material comprises or consist of carbon nanotubes, the carbon nanotubes may comprise or consist of at least one of a bundled secondary structure or an entangled secondary structure.

The bundled secondary structure of the carbon nanotubes refers to an agglomerate of primary structures aligned in the lengthwise direction of carbon nanotubes and bonded by the cohesive force between carbons, each primary structure being a single strand of carbon nanotube, and may be referred to as bundled CNT.

In an embodiment of the present disclosure, the carbon nanotubes may comprise or consist of, for example, entangled multi-walled carbon nanotubes.

In an embodiment of the present disclosure, the porous carbon material may have, for example, the BET specific surface area of 150 m$^2$/g or more. Preferably, the BET specific surface area of the porous carbon material may be 100 m$^2$/g or more and 2,500 m$^2$ or less, 150 m$^2$/g or more and 2,500 m$^2$ or less, 150 m$^2$ or more and 2,000 m$^2$ or less, 150 m$^2$ or more and 1,000 m$^2$ or less, 150 m$^2$ or more and 300 m$^2$ or less, or 170 or more and 200 m$^2$ or less. In the present disclosure, the "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mino II.

According to an embodiment of the present disclosure, the porous carbon material may be subjected to shape modification by grinding. Specifically, the grinding may involves crushing or shearing of particles. For example, the particles may be crushed or sheared between two blades. In this instance, the grinding is used to crush or shear the particles by applying stimulation to the outer surface of the particles. Additionally, when grinding the particles, the particles may be broken or separated by the friction between the rotating blades of a grinder and the particles.

In general, carbon nanotubes such as single-walled carbon nanotubes (SWCNT) or multi-walled carbon nanotubes (MWCNT) are synthesized using a thermal chemical vapor deposition method or an arc discharge method, and agglomeration occurs between the respective carbon nanotubes particles in the synthesis process. The agglomeration of the carbon nanotubes may be classified into physical agglomeration which is entangled agglomeration of nanotubes as each particle with each other at $\mu$m level, and chemical agglomeration which is agglomeration by surface attraction (~950 meV/nm) such as the van der waals force or the force between molecules at nm (nanometer) level like single-walled carbon nanotubes (SWCNT). The agglomeration of the carbon nanotubes may hinder the formation of a 3-dimensional network structure that may improve the mechanical strength and electrical conductivity characteristics. The agglomeration is a common phenomenon appearing in a linear conductive carbon material such as carbon nanotubes. In this context, the present disclosure uses the linear conductive carbon material to manufacture the electrode after disintegration by preprocessing, for example, grinding, and thus the below-described predetermined tap density range may be satisfied and the filling ratio of the sulfur-based material may be improved.

The porous carbon material of the conventional lithium-sulfur battery was used after it was preprocessed by a jet mill. However, the preprocessing of the porous carbon material through the jet mill falls short of improving the tap density due to low particle shape uniformity of the porous carbon **material** and smooth particle surface. However, the present disclosure uses the grinder to preprocess the porous carbon material. Since defects or flaws (for example, tearing) are generated in the respective conductive carbon materials on the surface of the porous carbon material and the conductive carbon materials are separated or loosened, it may be possible to increase the particle shape uniformity of the porous carbon material and improve the surface roughness of the particles, thereby further increasing the sulfur loading and further improving the tap density, but the present disclosure is not limited thereto.

In an embodiment of the present disclosure, the preprocessing for the shape modification of the porous carbon material may further include a process of sieving using a mesh of a predetermined size after the grinding.

In an embodiment of the present disclosure, the rotational speed of the grinder during the preprocessing for the shape modification of the porous carbon material may be 10,000 to 25,000 rpm or 15,000 rpm to 20,000 rpm. When the rotational speed of the grinder is in the above-described range, it may be possible to efficiently grind the porous carbon material. However, the rotational speed of the grinder is not limited to the above-described range and those skilled in the art may adjust the rotational speed of the grinder to grind the porous carbon material to the proper extent. In a specific embodiment of the present disclosure, the grinding may be performed using a centrifugal mill, for example, Retsch ZM-200.

In an embodiment of the present disclosure, the preprocessing process for the shape modification of the porous carbon material may include centrifugal milling by grinding at the above-described speed and classifying the particles through a mesh having the size of 50 to 100 $\mu$m, 60 to 100 $\mu$m, or 80 $\mu$m.

In an embodiment of the present disclosure, the porous carbon material may be used by pre-treatment through a pre-treatment process including milling by a centrifugal mill and classifying using a sieve according to the particle size, so that the porous carbon material has the above-described particle size, but the method for manufacturing the porous carbon material of the present disclosure is not limited thereto.

In one embodiment, the porous carbon material is prepared by centrifugal milling, preferably using a centrifugal grinder operated with an angular velocity from 30 to 125 rad/s, and sieving, preferably with a sieve having a mesh size 2.8 or more and 4 or less times the target $D_{50}$ particle size of the porous carbon material.

In this regard, the term "milling" refers to a process of comminuting the milled material. In this context, milling can be synonymous to grinding, pulverizing, mincing, crushing etc.

The centrifugal grinder used in the method according to the present invention may have a plurality of teeth, for example, 2 to 20 teeth, 4 to 18 teeth, 6 to 16 teeth, 8 to 14 teeth, 10 to 14 teeth, such as 12 teeth. Each of the plurality of teeth may have a shape of a triangular prism, particularly an equilateral triangular prism, and may be arranged so as to point inwardly. The teeth may be arranged so that, in a top view along a rotation axis of the centrifugal grinder, perpendicular bisectors of the triangular prisms meet in a center of the centrifugal grinder. The teeth may be made of stainless steel, titanium and/or stainless steel with a protective coating. An example of such a centrifugal grinder which can be used as the centrifugal grinder in the method according to the present invention is a centrifugal grinder ZM 200 of Retsch GmbH.

The centrifugally grinding may be performed at 6,000-23,000 rpm for the control of the particle size of the porous carbon material. The centrifugally grinding may be performed at 6,000-18,000 rpm for the control of the particle size of the porous carbon material. Especially, the centrifugally grinding may be performed at 6,000-23,000 rpm, preferably at 6,000 to 18,000 rpm for the control of the particle size of the porous carbon material if a centrifugal grinder as described above, such as ZM 200 of Retsch GmbH, is used.

Grinding of the porous carbon material in may be performed using the centrifugal grinder operated with an angular velocity from 30 to 125 rad/s. Grinding of the porous carbon material may be performed using the centrifugal grinder operated with an angular velocity from 30 to 95 rad/s. Grinding of the porous carbon material may be performed using the centrifugal grinder operated with an angular velocity from 30 to 125 rad/s, preferably 30 to 95 rad/s, if a centrifugal grinder as described above, such as ZM 200 of Retsch GmbH, is used.

$$Angular\ velocity = \frac{RPM \times circumference}{60\ s}$$

wherein the circumfence is the distance one tooth of the centrifugal binder moves until it returns to the same spot, that is, one complete rotation of the tooth.

The porous carbon material centrifugally milled may be filtered through a sieve.

The sieve may be equipped on the outer rim of the centrifugal grinder. The sieve may have an annular cylindrical shape, wherein the sieve is arranged such as to surround the plurality of teeth. In the top view, a smallest distance between one of the plurality of teeth and the sieve in a radial direction of the centrifugal grinder may be from 0.1 to 5 mm or from 0.5 to 2 mm, such as about 1 mm. The sieve may comprise a mesh having trapezoid shaped holes and/or circular holes.

As the teeth rotate, the porous carbon material is milled and particles of the porous carbon material having reached an appropriate size penetrate through the sieve immediately and do not take further damage (comminution). In this way improved article size control and narrow particle size distribution can be achieved.

Milling and sieving may be performed by a continuous process, that is, at the same time.

The particle size of the porous carbon material may be controlled by controlling the mesh size of the sieve. The mesh size of the sieve may be 2.8-4 times of the target $D_{50}$ particle size of the porous carbon material ($2.8 \leq$ mesh size/target $D_{50} \leq 4$). The target $D_{50}$ particle size is the $D_{50}$ particle size desired by one carrying out the method according to the invention and can be freely chosen within the limits imposed by the used equipment. For example, the target $D_{50}$ particle size may be in the range from 10 $\mu$m to 100 $\mu$m, such as about 20 $\mu$m.

By one or more of the foregoing operations, the porous carbon material can be shape modified.

Accordingly, the porous carbon material may be shape modified such that the particle size is small and uniform, and a length ratio of long axis and short axis converges to 1.3 or less, specifically 1, by improving the surface roughness of the particles through the grinding.

In the lithium-sulfur battery according to an embodiment of the present disclosure, the porous carbon material preferably has, for example, a tap density of 0.1 g/cm$^3$ or less or less than 0.1 g/cm$^3$ when it is tapped 1000 times. For example, in an embodiment of the present disclosure, the tap density of the porous carbon material may be 0.09 g/cm$^3$ or less. Specifically, the tap density of the porous carbon material may be 0.07 g/cm$^3$ or less. More specifically, the tap density of the porous carbon material may be 0.02 g/cm$^3$ to 0.09 g/cm$^3$, 0.05 g/cm$^3$ to 0.09 g/cm$^3$, or 0.05 g/cm$^3$ to 0.07 g/cm$^3$. When the tap density of the porous carbon material is in the above-described range, it may be possible to increase the amount of the sulfur (S) loaded onto the porous carbon material, improve the porosity of the positive electrode, and provide the lithium-sulfur battery with high energy density and high reactivity of the positive electrode, but the present disclosure is not limited thereto.

In the present disclosure, the tap density may be measured in accordance with ASTM B527-06 and may be measured using TAP-2S (LOGAN).

According to an embodiment of the present disclosure, the porous carbon material which is preferably shape modified may comprise spherical particles having pores on the surface in which a particle shape uniformity representing a ratio of long axis length and short axis length of the spherical particles is 1.3 or less. The particle shape uniformity of the porous carbon material (which is formed of particles) according to the following Equation may be 1 to 1.3, 1 to 1.2, or 1 to 1.1.

Particle shape uniformity = average diameter of circumscribed circle of particles/ average diameter of inscribed circle of the particles.                    [Equation 1]

In the present disclosure, the particle shape uniformity may be expressed as a ratio of long axis length and short axis length of the particle, i.e., a length ratio of the diameter of the circumscribed circle of the particle and the diameter of the inscribed circle of the particle, and in this instance, as the uniformity is higher, the value may be closer to "1", and as the uniformity is lower, the value may be farther away from 1.

In an embodiment of the present disclosure, the 'long axis' may represent the longest length of the particle, and preferably, may be measured as the length of the diameter of the circumscribed circle of the particle. Additionally, the 'short axis' may represent the shortest length of the particle, and preferably, may be measured as the length of the diameter of the inscribed circle of the particle.

In the present disclosure, the length of the long axis (the diameter of the circumscribed circle) of the particle and the length of the short axis (the diameter of the inscribed circle) may be measured for each particle using an image analyzer, for example, scanning electron microscopy (SEM), transmission electron microscopy (TEM), or measured by the known particle size measurement methods.

**In** an embodiment of the present disclosure, the particle shape uniformity may be measured by imaging a sheet of particles distributed and immobilized in parallel arrangement using a scanning electron microscope (S - 4800, Hitachi High-Technologies Corporation) immediately above the sheet, and analyzing the image using Azokun (Asahi Kasei Engineering Corporation). In this instance, particle shape uniformity of at least 5 or at least 10 particles, for example, 10 to 1000 particles, 100 to 1000 particles or 100 to 500 particles may be measured, and the average of the measured particle shape uniformity values may be the particle shape uniformity of particles. For example, shape uniformity of 300 particles may be measured, and the average value of the measured particle shape uniformity values may be the shape uniformity of all the particles. However, the number of particles used to measure the particle shape uniformity is not limited to the above-described range, and those skilled in the art may select the proper number of particles.

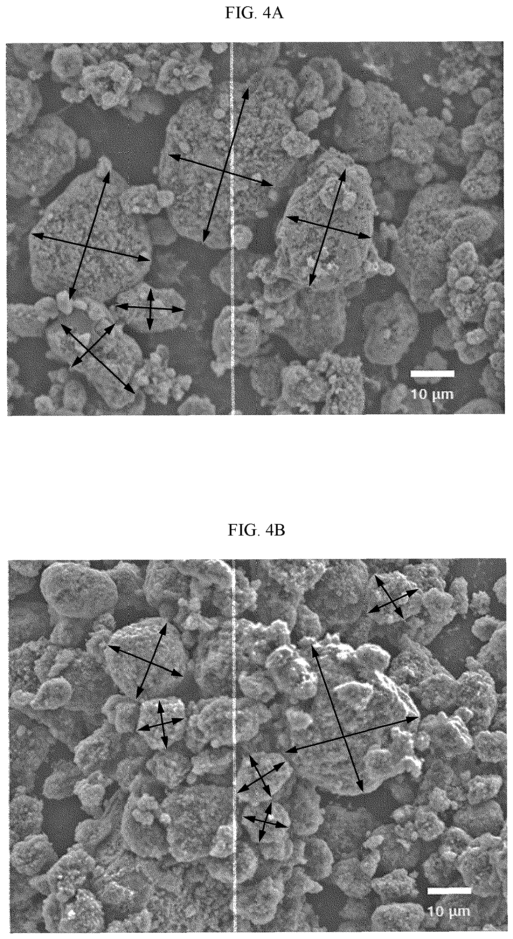

FIG. 4A and 4B show SEM images (Jeol, 1,000 magnification) used to measure particle shape uniformity of a porous carbon material according to an embodiment in the present specification. According to one embodiment of the present invention, particle shape uniformity may be calculated by measuring the ratio of the lengths of the long axis and short axis of at least five particles on the image of the porous carbon material and calculating their average value.

In an embodiment of the present disclosure, the particle size $D_{50}$ of the porous carbon material, which is preferably shape modified may be, for example, 120 $\mu$m or less, for example, 100 $\mu$m or less, 90 $\mu$m or less, or 80 $\mu$m or less. When the particle size of the porous carbon material satisfies the above-described range, the electrode surface uniformity may increase, and the cycling life of the battery may improve.

In another embodiment of the present disclosure, the porous carbon material which is preferably shape modified may have a Broadness Factor (BF) of 7 or less, preferably of 4 or more and 7 or less. The BF may refer to a ratio of the particle size $D_{90}$ to particle size $D_{10}$ of the particles forming the porous carbon material and may be calculated as a value of [particle size $D_{90}$/particle size $D_{10}$].

In the present disclosure the "particle size $D_{10}$" refers to a particle size at 10% of cumulative volume particle size distribution of particles, the "particle size $D_{50}$" refers to a particle size at 50% of cumulative volume particle size distribution of particles, and the "particle size $D_{90}$" refers to a particle size at 90% of cumulative volume particle size distribution of particles.

Each of $D_{10}$, $D_{50}$ and $D_{90}$ may be measured using a laser diffraction method. For example, each of $D_{10}$, $D_{50}$ and $D_{90}$ may be measured by dispersing a powder of particles to be measured in a dispersion medium, introducing into a commercially available laser diffraction particle size measurement machine (for example, Microtrac MT 3000), irradiating ultrasound of about 28 kHz with an output of 60W to acquire a cumulative volume particle size distribution graph, and determining the particle size corresponding to each of 10%, 50% and 90% of the cumulative volume distribution.

Using the above-described porous carbon material, the positive electrode according to an aspect of the present disclosure may have the porosity of 80 vol% or more, but the mechanism of the present disclosure is not limited thereto.

In an embodiment of the present disclosure, the porosity of the positive electrode may be, for example, 80 vol% to 90 vol%, specifically 80 vol% to 85 vol%, 81 vol% to 85 vol%, or 82 vol% to 83 vol%. When the porosity of the positive electrode is in the above-described range, it may be possible to improve the reactivity of the positive electrode, but the present disclosure is not limited thereto.

In the present disclosure, the porosity of the positive electrode may be, for example, measured by the commonly used Hg porosimeter, and for example, may be measured using a mercury porosimeter (Micromeritics AUTOPORE V). Additionally, the porosity of the positive electrode may be measured by the Brunauer-Emmett-Teller (BET) measurement method using the commonly used adsorption gas such as nitrogen, and for example, may be measured using BEL Japan's BELSORP series analyzer, for example, mini II, but the present disclosure is not limited thereto. The porosity measured by the above-described method may refer to the total volume of pores in the positive electrode. Additionally, the porosity may be measured by calculation from the true density of the constituent materials of the positive electrode, the apparent density of the manufactured positive electrode and the thickness of the positive electrode. Specifically, the porosity may be calculated as a value of [(true density-apparent density)/true density] X 100(%) of the positive electrode.

Hereinafter, the configuration of the positive electrode of the present disclosure will be described in more detail.

The sulfur-carbon composite may be formed by simply mixing the sulfur-based material with the carbon material, or coating or loading into a core-shell structure. The coating of the core-shell structure may comprise coating any one of the sulfur-based material and the carbon material on the other material, and for example, covering the surface of the carbon material with sulfur or vice versa. Additionally, the loading may comprise filling the sulfur-based material in the carbon material, especially the pores of the carbon material. The sulfur-carbon composite may be available in any form that satisfies the above-described content ratio of the sulfur and the carbon material, and the present disclosure is not limited thereto.

Subsequently, there is provided a method for manufacturing the sulfur-carbon composite. The method for manufacturing the sulfur-carbon composite according to the present disclosure is not limited to a particular type and may include any method commonly used in the corresponding technical field, and the sulfur-carbon composite may be manufactured by a composite manufacturing method comprising (S1) mixing the porous carbon material with the sulfur-based material, and (S2) forming a composite.

The step (S1) of mixing may be performed by a stirrer commonly used in the corresponding technical field to improve the mixing between the sulfur-based material and the porous carbon material. In this instance, the mixing time and speed may be selectively adjusted according to the amounts and conditions of the raw materials.

The step (S2) of forming the composite is not limited to a particular method in the present disclosure and may use any method commonly used in the corresponding technical field. The method commonly used in the corresponding technical field, for example, a dry composite forming method or a wet composite forming method such as such as spray coating may be used. For example, a method may be used, the method comprising milling the mixture of the sulfur and the carbon material obtained after the mixing by ball milling and placing it in an oven of 120 to 160°C for 20 minutes to 1 hour to uniformly coat the molten sulfur on the inner and outer surfaces of the first carbon material.

In one embodiment, the sulfur-carbon composite is obtainable by mixing the porous carbon material and the sulfur-based material and subsequentially heating the mixed porous carbon material and sulfur-based material at a temperature of 120°C or more.

In an embodiment of the present disclosure, the sulfur-carbon composite preferably comprises the sulfur (S) in an amount of 60 wt% or more, 70 wt% or more, or 75 wt% or more, based on 100 wt% of the sulfur-carbon composite. For example, the sulfur-carbon composite may preferably comprise the sulfur (S) in an amount of 60 wt% to 99 wt%, 70 wt% to 99 wt%, 75 wt% to 90 wt%, 70 wt% to 85 wt%, 70 wt% to 80 wt%, or 70 wt% to 75 wt% based on 100 wt% of the sulfur-carbon composite.

In one embodiment, the sulfur-carbon composite has a botryoidal texture.

In one embodiment, the positive electrode may have a loading amount of 3.5 mAh/cm$^2$ or more, preferably of 3.5 mAh/cm$^2$ or more and 4.5 mAh/cm$^2$ or less.

In one embodiment, the positive electrode may have a loading amount of 2.9 mg(S)/cm$^2$ or more, preferably 3.1 mg(S)/cm$^2$ or more and 3.5 mg(S)/cm$^2$ or less, more preferably 3.1 mg(S)/cm$^2$. mg(S) is the amount of sulfur.

In an embodiment of the present disclosure, in addition with the sulfur-carbon composite, the positive electrode active material layer may comprise a binder polymer. Additionally, in addition to the positive electrode active material and the binder resin, the positive electrode active material layer may further comprise a conductive material, if necessary. In this instance, in an embodiment of the present disclosure, the positive electrode active material layer may preferably comprise the positive electrode active material in an amount of 70 wt% or more, 85 wt% or more, or 90 wt% or more based on 100 wt% of the positive electrode active material layer.

The binder polymer may play a role in attaching the positive electrode active material particles to each other and improving the adhesion strength between the positive electrode active material and the positive electrode current collector, and specific examples may include at least one of polyvinylidenefluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or a variety of copolymers thereof. The binder resin may be included in an amount of 1 to 30 wt%, preferably 1 to 20 wt%, and more preferably 1 to 10 wt% based on the total **weight of** the positive electrode active material layer.

The conductive material may be used to provide conductive properties to the electrode, and may include, without limitation, any conductive material having the ability to conduct electrons without causing any chemical change in the corresponding battery. Specific examples may include at least one of graphite such as natural graphite or artificial graphite; a carbon-based material such as carbon black, acetylene black, ketjen black, channel black, furnace black, lamp black, thermal black, carbon fibers, carbon nanotubes; metal powder or metal fibers of copper, nickel, aluminum, silver; conductive whiskers of zinc oxide, potassium titanate; conductive metal oxide such as titanium oxide; or conductive polymer such as polyphenylene derivatives. When the conductive material is used, the conductive material may be typically included in an amount of 1 to 30 wt%, preferably 1 to 20 wt%, and more preferably 1 to 10 wt% based on the total weight of the positive electrode active material layer.

**In** an embodiment of the present disclosure, the positive electrode current collector may include various types of positive electrode current collectors used in the corresponding technical field. For example, the positive electrode current collector may include stainless steel, aluminum, nickel, titanium, sintered carbon or aluminum or stainless steel treated with carbon, nickel, titanium or silver on the surface. The positive electrode current collector may be typically 3 $\mu$m to 500 $\mu$m in thickness, and the positive electrode current collector may have microtexture on the surface to increase the adhesion strength of the positive electrode active material. The positive electrode current collector may come in various forms, for example, a film, a sheet, a foil, a net, a porous body, a foam and a nonwoven.

According to another aspect of the present disclosure, there is provided a lithium-sulfur battery comprising the above-described positive electrode.

Specifically, the lithium-sulfur battery comprises an electrode assembly comprising a positive electrode according to the invention, a negative electrode and a separator interposed between the positive electrode and the negative electrode; and an electrolyte.

For example, the electrode assembly may form a stack type or stack/folding structure including the negative electrode and the positive electrode stacked with the separator interposed between the negative electrode and the positive electrode, or a jelly-roll structure including the negative and positive electrodes and the separator rolled up. Furthermore, in the jelly-roll structure, an additional separator may be placed on the outer side to prevent the contact between the negative electrode and the positive electrode.

The negative electrode may comprise a negative electrode current collector; and a negative electrode active material layer on at least one surface of the negative electrode current collector, and the negative electrode active material layer may comprise a negative electrode active material, and if necessary, further comprise a conductive material and/or a binder.

The current collector, the active material, the conductive material and the binder of the negative electrode may include those commonly used in lithium-sulfur batteries, and the present disclosure is not limited to a particular type.

The separator is disposed between the negative electrode and the positive electrode in the electrode assembly. The separator may separate the negative electrode from the positive electrode and provide movement channels of lithium ions, and may include, without limitation, any type of separator commonly used in lithium secondary batteries.

The electrolyte may include any type of electrolyte available in lithium-sulfur batteries, for example, an organic liquid electrolyte, an inorganic liquid electrolyte, a solid polymer electrolyte, a gel polymer electrolyte, a solid inorganic electrolyte and a molten inorganic electrolyte, but is not limited thereto.

Specifically, the electrolyte may comprise an organic solvent and a lithium salt.

The organic solvent may comprise an ether-based solvent to improve charge/discharge performance of the battery. As a nonaqueous solvent, the ether-based solvent may include at least one of cyclic ether (for example, 1,3-dioxolane, tetrahydrofuran, tetrohydropyran, etc.), a linear ether compound (for example, 1,2 dimethoxyethane, etc.) or low viscosity fluorinated ether (for example, 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, 1H, 1H,2'H-perfluorodipropyl ether).

**In** an embodiment of the present disclosure, the organic solvent may comprise a mixture of 2-methylfuran and dimethoxyethane, and for example, the mixture of 2-methylfuran and dimethoxyethane at a volume ratio (v/v) of 1:9 to 5:5, but is not limited thereto.

The lithium salt may include, without limitation, any compound that provides lithium ions used in lithium secondary batteries. Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI or $LiB(C_2O_4)_2$. The concentration of the lithium salt may be in a range between 0.1 and 5.0M, and preferably 0.1 and 3.0M. When the concentration of the lithium salt is included in the above-described range, the electrolyte may have proper conductivity and viscosity and exhibit the outstanding electrolyte performance, thereby effectively transporting lithium ions.

In addition to the above-described constituent substances of the electrolyte, the electrolyte may further comprise an additive to improve the life characteristics of the battery, prevent the capacity fading of the battery and improve the discharge capacity of the battery. For example, the additive may at least one of $LiNO_3$, a haloalkylene carbonate-based compound such as difluoro ethylene carbonate, pyridine, triethylphosphite, triethanolamine, cyclic ether, ethylene diamine, n-glyme, hexamethylphosphorous triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, but is not limited thereto. The additive may be $LiNO_3$. The additive may be included in an amount of 0.1 to 10 wt%, and preferably 0.1 to 5 wt% based on the total weight of the electrolyte.

Meanwhile, in an embodiment of the present disclosure, in the lithium-sulfur battery of the present disclosure, a ratio (El/S) of the total weight of the electrolyte to the total weight of sulfur (S) in the electrode assembly may be preferably, for example, 3.5 g/g or less, for example, 3.3 g/g or less, 3.2 g/g or less, or 3.0 g/g or less. Additionally, in the lithium-sulfur battery, the ratio (El/S) of the total weight of the electrolyte to the total weight of sulfur (S) in the electrode assembly may be 2.0 to 3.0 g/g/, for example, 2.3 g/g. Using the sulfur-carbon composite according to the present disclosure, it may be possible to realize the lithium-sulfur battery having the above-described range of El/S ratios, thereby improving energy density. However, the lithium-sulfur battery using the sulfur-carbon composite may have higher El/S ratios than the above-described range, and the present disclosure is not limited thereto.

The lithium-sulfur battery is not limited to a particular shape and may come in various shapes, for example, cylindrical, stack and coin shapes.

Additionally, the present disclosure provides a battery module including the lithium-sulfur battery as a unit battery. The battery module may be used as a source of power for medium- and large-scale devices requiring high temperature stability, long cycle life characteristics and high capacity characteristics.

According to an embodiment of the present disclosure, the lithium-sulfur battery using the above-described positive electrode may have the discharge capacity per weight of sulfur (S) of 1,000 mAh/gs or more, further 1,100 mAh/gs, but the present disclosure is not limited thereto.

According to an embodiment of the present disclosure, the lithium-sulfur battery using the above-described positive electrode may have the energy density of 350 Wh/kg or more, but the present disclosure is not limited thereto. Specifically, the energy density of the lithium-sulfur battery may be 400 Wh/kg or more or 430 Wh/kg or more, and for example, the energy density of the lithium-sulfur battery may be 350 Wh/kg to 500 Wh/kg or 430 Wh/kg to 480 Wh/kg, but the higher energy density of the lithium-sulfur battery, the better performance of the battery, and thus the upper limit of the energy density is not particularly limited.

In an embodiment of the present disclosure, the lithium-sulfur battery may be used in small devices such as mobile phones as well as medium- and large-scale devices, and examples of the mediumand large-scale device may include power tools; electric cars including electric vehicles (EV), hybrid electric vehicles (HEV), plug-in hybrid electric vehicles (PHEV); electric two-wheeled vehicles including E-bikes, E-scooters; electric golf carts; energy storage systems that work using power produced by an electric motor, but is not limited thereto.

In one embodiment, the lithium-sulfur battery is a pouch cell lithium-sulfur battery, a coin cell lithium-sulfur battery or a cylindrical cell lithium-sulfur battery.

Hereinafter, the present disclosure will be described in more detail through examples, but the following examples are provided by way of illustration, and the scope of the present disclosure is not limited thereto.

**<Manufacture of lithium-sulfur battery>**

**Example 1**

Preparation of porous carbon material

Agglomerates of multi-walled carbon nanotubes (Cnano, MWCNT, tap density 0.14 g/cm$^3$, particle shape uniformity 1.52) were prepared. Subsequently, the agglomerates were ground at 18,000 rpm using a grinder (Retsch, ZM-200), and allowed to pass through a mesh having the opening size of 80 $\mu$m to prepare a porous carbon material.

When the porous carbon material was tapped 1000 times, the measured tap density was 0.07 g/cm$^3$, and the measured particle shape uniformity according to SEM (FIG. 4B)was 1.07, wherein the particle shape uniformity refers to a ratio of the average diameter of a circumscribed circle of particles to the average diameter of an inscribed circle of particles, and was calculated as a value of [the diameter of the circumscribed circle(long axis)/the diameter of the inscribed circle(short axis)] (Measurement 1: 1.01, Measurement 2: 1.06, Measurement 3: 1.02, Measurement 4: 1.18, Measurement 5: 1.07).

Manufacture of sulfur-carbon composite

The porous carbon material obtained as described above and sulfur ($S_8$) were uniformly mixed at a weight ratio of 30:70 (CNT:$S_8$). Subsequently, thermal treatment was performed in an oven of 155°C for 30 minutes to load sulfur onto the porous carbon material to manufacture a sulfur-carbon composite.

Manufacture of positive electrode

The sulfur-carbon composite obtained as described above and polyacrylic acid as a binder polymer were added to water and mixed together to prepare a positive electrode slurry. In this instance, a weight ratio of the sulfur-carbon composite and the binder polymer was 96:4. The solids content in the slurry was 27 wt%.

The slurry was coated on an aluminum foil (thickness: 20 $\mu$m) using a Mathis coater and dried at 50°C for 24 hours, followed by rolling to manufacture a positive electrode. The porosity of the manufactured positive electrode was 83 vol%, and the loading amount of the positive electrode active material is 3.1 mg(S)/cm$^2$. In this instance, the porosity was calculated as a percent of a value obtained by subtracting the density (apparent density) of the manufactured positive electrode from the true density of the constituent materials of the positive electrode and dividing by the true density.

$$\text{Porosity (vol\%)}= [(\text{true density-apparent density})/\text{true density}] \ X \ 100$$

Manufacture of lithium-sulfur battery

For a negative electrode, a 45 $\mu$m thick lithium metal foil was prepared, and for an electrolyte, a mixed solution was prepared, in which 3 wt% of $LiNO_3$ and 0.75M LiFSI were dissolved in a mixed organic solvent of 2-methylfuran and dimethoxyethane at a volume ratio of 3:7.

The positive electrode and the negative electrode manufactured and prepared as described above were placed with a polyethylene separator having the thickness of 16 $\mu$m and porosity of 46% interposed between, and the electrolyte was injected 2.3 times larger than the weight of sulfur to manufacture a lithium-sulfur battery.

**Example 2**

A lithium-sulfur battery was manufactured by the same method as example 1 except the weight ratio of the porous carbon material and sulfur was changed to 25:75 when manufacturing the sulfur-carbon composite. In this instance, the porosity of the manufactured positive electrode was 82 vol%, and the loading amount of the positive electrode active material is 3.1 mg(S)/cm$^2$.

**Comparative example 1**

Preparation of porous carbon material

Agglomerates of multi-walled carbon nanotubes (Cnano, MWCNT, tap density 0.14 g/cm$^3$, particle shape uniformity 1.52) were prepared. Subsequently, the agglomerates were jet-milled to prepare carbon nanotubes agglomerates having the tap density of 0.1 g/cm$^3$ and the particle shape uniformity of 1.44.

Manufacture of sulfur-carbon composite

The porous carbon material obtained as described above and sulfur ($S_8$) were uniformly mixed at a weight ratio of 30:70 (CNT:$S_8$). Subsequently, thermal treatment was performed in an oven of 155 °C for 30 minutes to load sulfur onto the porous carbon material to manufacture a sulfur-carbon composite.

Manufacture of positive electrode and the battery

A lithium-sulfur battery was manufactured by the same method as example 1 except that the sulfur-carbon composite manufactured as described above was used. In this instance, the porosity of the manufactured positive electrode was 79 vol% and the loading amount of the positive electrode active material is 3.1 mg(S)/cm$^2$.

**Comparative example 2**

A lithium-sulfur battery was manufactured by the same method as comparative example 1 except that the weight ratio of the porous carbon material and sulfur was changed to 25:75 (CNT:$S_8$) when manufacturing the sulfur-carbon composite. In this instance, the porosity of the manufactured positive electrode was 78 vol% and the loading amount of the positive electrode active material is 3.1 mg(S)/cm$^2$.

**Comparative example 3**

A lithium-sulfur battery was manufactured by the same method as comparative example 1 except that the weight ratio of the porous carbon material and sulfur was changed to 35:65 (CNT:$S_8$) when manufacturing the sulfur-carbon composite. In this instance, the porosity of the manufactured positive electrode was 80 vol% and the loading amount of the positive electrode active material is 3.1 mg(S)/cm$^2$.

**Comparative example 4**

Preparation of porous carbon material

Carbon nanotubes agglomerates having the tap density of 0.2/cm$^3$ and true sphericity of 1.44 were prepared without preprocessing (grinding).

FIG. 4A shows an SEM image of the porous carbon material, and was calculated as the value of [average diameter of circumscribed circle (long axis)/average diameter of inscribed circle (short axis)] of the five particles in the image. (Measurement 1: 2.06, Measurement 2: 1.26, Measurement 3: 1.37, Measurement 4: 1.36, Measurement 5: 1.16)

Manufacture of sulfur-carbon composite

The porous carbon material obtained as described above and sulfur ($S_8$) were uniformly mixed at a weight ratio of 25:75 (CNT:$S_8$). Subsequently, thermal treatment was performed in an oven of 155 °C for 30 minutes to load sulfur onto the porous carbon material to manufacture a sulfur-carbon composite.

Manufacture of positive electrode and battery

Subsequently, a lithium-sulfur battery was manufactured by the same method as comparative example 1 except that the sulfur-carbon composite manufactured as described above was used. In this instance, the porosity of the manufactured positive electrode was 77 vol% and the loading amount of the positive electrode active material is 3.1 mg(S)/cm$^2$.

The following Table 1 summarizes the characteristics of the lithium-sulfur battery manufactured as described above.

[Table 1]

| | Porous carbon material | | Positive electrode active material layer | Positive electrode active layer |
|---|---|---|---|---|
| | Tap density (g/cm$^3$) | Particle shape uniformity (long axis/short axis) | Sulfur ($S_8$) content (wt%) | Porosity (vol%) |
| Example 1 | 0.07 | 1.07 | 67.2 | 83 |
| Example 2 | 0.07 | 1.07 | 72 | 82 |
| Comparative example 1 | 0.1 | 1.44 | 67.2 | 79 |
| Comparative example 2 | 0.1 | 1.44 | 72 | 78 |
| Comparative example 3 | 0.1 | 1.44 | 62.2 | 80 |
| Comparative example 4 | 0.2 | 1.44 | 72 | 77 |

**<Thickness to amount of carbon ratio>**

| Example 1 | Example2 | Com. Example 1 | Com. Example2 | Com. Example3 | Com. Example4 | |
|---|---|---|---|---|---|---|
| 95 | 119 | 86 | 95 | 88 | 86 | Based on fresh cell |
| 83 | 98 | 76 | 78 | 79 | 69 | On operating (SOC 100) |

**<Specific capacity evaluation of lithium-sulfur battery>**

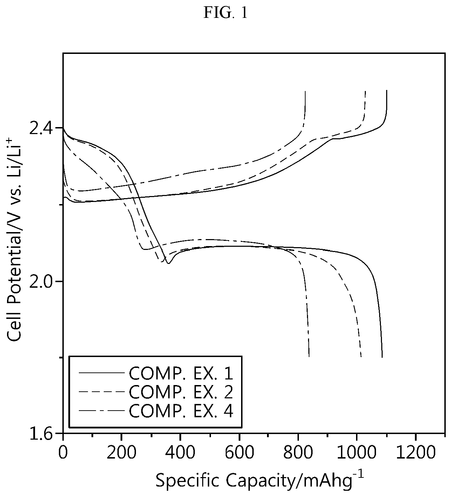

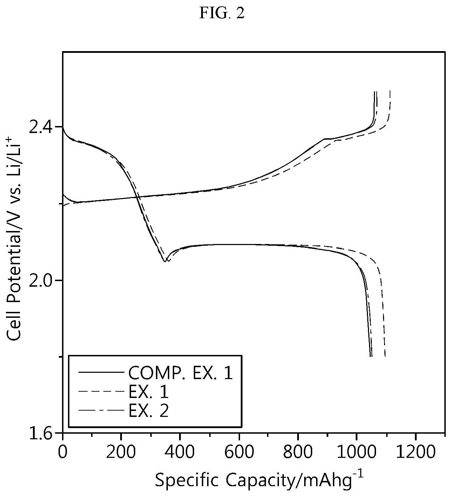

FIG. 1 is a performance evaluation graph of the lithium-sulfur batteries according to comparative examples 1, 2 and 4, and FIG. 2 is a performance evaluation graph of the lithium-sulfur batteries according to examples 1 and 2 and comparative example 1.

Each lithium-sulfur battery manufactured in example and comparative example was discharged at 0.1C (C-rate) in CC mode at 25°C until 1.8V and charged with 0.1C constant current until 2.5V, and then the discharge capacity was measured. The discharge capacity was measured as the discharge capacity (specific capacity, mAh/g (s)) per sulfur (S) content in the positive electrode.

Referring to FIG. 1, it can be seen that in the lithium-sulfur battery using the porous carbon material having high tap density and low particle shape uniformity as conventionally, when the sulfur content increases, reactivity reduces and discharge capacity decreases (comparative examples 1 and 2). Additionally, it can be seen that as the density of the porous carbon material increases, reactivity reduces and discharge capacity decreases (comparative examples 1 and 4).

Referring to FIG. 2, it can be seen that the lithium-sulfur battery using the porous carbon material having low tap density and high particle shape uniformity through shape modification had improved reactivity compared to the lithium-sulfur battery using the same sulfur content but the porous carbon material having high tap density and low particle shape uniformity (example 1 and comparative example 1). Additionally, it can be seen that when the surface modified porous carbon material is used, in case that sulfur loading increases, reactivity is maintained (examples 1 and 2).

**<Energy density comparison>**

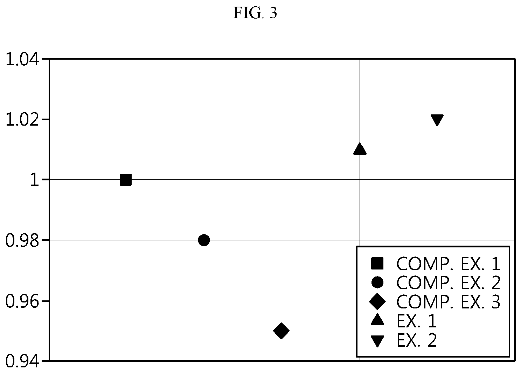

The energy density was calculated by measuring the capacity of the lithium-sulfur batteries according to examples 1 to 2 and comparative examples 1 to 3, multiplying the measured capacity by voltage and dividing by the weight of each lithium-sulfur battery, and its results are shown in the following Table 2 and FIG. 3.

FIG. 3 is a graph showing the relative energy density of the lithium-sulfur batteries according to examples 1 to 2 and comparative examples 1 to 3 to the energy density of comparative example 1.

[Table 2]

|  | Energy density (Wh/kg) |
| --- | --- |
| Comparative example 1 | 425 |
| Comparative example 2 | 418 |
| Comparative example 3 | 425 |
| Example 1 | 446 |
| Example 2 | 458 |

In the case of comparative examples 1 to 3, i.e., the lithium-sulfur batteries using the porous carbon material having high tap density and low particle shape uniformity as conventionally, it was confirmed that as the sulfur content increases, reactivity reduces and discharge capacity decreases, resulting in low energy density (comparative examples 1 and 2). It was confirmed that comparative example 3 had high reactivity due to low sulfur loading, but low energy density due to the small amount of the positive electrode active material.

On the other hand, it was confirmed that the lithium-sulfur battery according to example 1 had the improved reactivity and discharge capacity and consequential increased energy density, and example 2 had higher sulfur content than example 1 but did not reduce in discharge capacity, and thus had an increase in energy density.

**Claims**

1.  A positive electrode, comprising:

    a current collector; and a positive electrode active material layer on at least one surface of the current collector, wherein

    - the positive electrode active material layer comprises a sulfur-carbon composite and a binder polymer,
    - the sulfur-carbon composite comprises a porous carbon material, and a sulfur-based material,

    the sulfur-based material is located on at least a part of the porous carbon material,

    - an amount of the sulfur (S) is 65 wt% or more and 90 wt% or less based on a total 100 wt% of the positive electrode active material layer, and
    - a porosity of the positive electrode is more than 80 vol%.

2.  The positive electrode according to claim 1, wherein a tap density of the porous carbon material is 0.09 g/cm$^3$ or less.

3.  The positive electrode according to any of the preceding claims, wherein the porous carbon material is formed of particles and the particles have a particle shape uniformity according to the following Equation 1of 1.3 or less and 1.0 or more:

Particle shape uniformity = average diameter of a circumscribed circle of the particles /average diameter of an inscribed circle of the particles. [Equation 1]

4. The positive electrode according to any of the preceding claims, wherein the porosity of the positive electrode is 81 vol% or more and 85 vol% or less.

5. The positive electrode according to any of the preceding claims, wherein the porous carbon material comprises a secondary structure of agglomerated primary structures, wherein the primary structures are carbon nanotubes.

6. The positive electrode according to any of the preceding claims, wherein the sulfur-carbon composite has a botryoidal texture.

7. The positive electrode according to any of the preceding claims, wherein a tap density of the porous carbon material is 0.07 g/cm$^3$ or less.

8. The positive electrode according to any of the preceding claims, wherein the amount of the sulfur (S) is 65 wt% or more and 75 wt% or less based on the total 100 wt% of the positive electrode active material layer.

9. A positive electrode, comprising:

a current collector; and a positive electrode active material layer on at least one surface of the current collector, wherein

- the positive electrode active material layer comprises a sulfur-carbon composite and a binder polymer,
- the sulfur-carbon composite comprises a porous carbon material, and a sulfur-based material,

the sulfur-based material is located on at least a part of the of the porous carbon material,

- an amount of the sulfur (S) is 65 wt% or more and 90 wt% or less based on a total 100 wt% of the positive electrode active material layer, and

the porous carbon material is formed of particles has and the particles have a particle shape uniformity according to the following Equation 1of 1.3 to 1:

Particle shape uniformity = average diameter of a circumscribed circle of the particle /average diameter of an inscribed circle of the particles. [Equation 1]

10. The positive electrode according to claim 13, wherein a tap density of the porous carbon material is 0.09 g/cm$^3$ or less.

11. The positive electrode according to any of the preceding claims, wherein the porous carbon material is prepared by centrifugal milling, preferably using a centrifugal grinder operated with an angular velocity 30 rad/s or more and 125 rad/s or less, and sieving, preferably with a sieve having a mesh size of 50 $\mu$m or more and 100 $\mu$m or less.

12. The positive electrode according to any of the preceding claims, wherein the porous carbon material has a broadness factor (BF) of 4 or more and 7 or less, wherein the broadness factor is the ratio ($D_{90}/D_{10}$) of the particle size $D_{90}$ to the particle size $D_{10}$ of the porous carbon material.

13. The positive electrode according to any of the preceding claims, wherein the sulfur-carbon composite is obtainable by mixing the porous carbon material and the sulfur-based material and subsequentially heating the mixed porous carbon material and sulfur-based material at a temperature of 120°C or more.

14. A lithium-sulfur battery, comprising an electrode assembly:
wherein the electrode assembly comprises the positive electrode according to any one of claims 1 to 13; a negative electrode; and a separator interposed between the positive electrode and the negative electrode; and an electrolyte.

15. The lithium-sulfur battery according to claim 14, wherein a weight ratio (El/S weight ratio) of the electrolyte and sulfur (S) in the sulfur-carbon composite in the lithium-sulfur battery is 3.5 g/g or less.

16. The lithium-sulfur battery according to claim 14 or claim 15, wherein an energy density of the lithium-sulfur battery is 400 Wh/kg or more.

17. The lithium-sulfur battery according to claim 14 to 16, wherein the electrolyte comprises a $LiNO_3$.

18. The lithium-sulfur battery according to any of the claims 14 to 17, wherein the lithium-sulfur battery is a pouch cell lithium-sulfur battery, a coin cell lithium-sulfur battery or a cylindrical cell lithium-sulfur battery.


**Patentansprüche**

1. Positive Elektrode, umfassend:

   einen Stromabnehmer; und eine Positivelektroden-Aktivmaterialschicht auf mindestens einer Oberfläche des Stromabnehmers,
   wobei

   - die Positivelektroden-Aktivmaterialschicht einen Schwefel-Kohlenstoff-Verbundstoff und ein Bindemittelpolymer umfasst,
   - der Schwefel-Kohlenstoff- Verbundstoff ein poröses Kohlenstoffmaterial und ein Material auf Schwefelbasis umfasst,

   das Material auf Schwefelbasis sich auf mindestens einem Teil des porösen Kohlenstoffmaterials befindet,

   - eine Menge des Schwefels (S) 65 Gew.-% oder mehr und 90 Gew.-% oder weniger beträgt, bezogen auf insgesamt 100 Gew.-% der Positivelektroden-Aktivmaterialschicht, und
   - eine Porosität der positiven Elektrode mehr als 80 Vol.-% beträgt.

2. Positive Elektrode nach Anspruch 1, wobei eine Klopfdichte des porösen Kohlenstoffmaterials 0,09 g/cm$^3$ oder weniger beträgt.

3. Positive Elektrode nach einem der vorhergehenden Ansprüche, wobei das poröse Kohlenstoffmaterial aus Partikeln gebildet ist und die Partikel eine Partikelformgleichförmigkeit gemäß der folgenden Gleichung 1 von 1,3 oder weniger und 1,0 oder mehr aufweisen:

   Partikelformgleichförmigkeit = durchschnittlicher Durchmesser eines umschriebenen Kreises der Partikel / durchschnittlicher Durchmesser eines eingeschriebenen Kreises der Partikel. [Gleichung 1]

4. Positive Elektrode nach einem der vorhergehenden Ansprüche, wobei die Porosität der positiven Elektrode 81 Vol.-% oder mehr und 85 Vol.-% oder weniger beträgt.

5. Positive Elektrode nach einem der vorhergehenden Ansprüche, wobei das poröse Kohlenstoffmaterial eine Sekundärstruktur aus agglomerierten Primärstrukturen umfasst, wobei die Primärstrukturen Kohlenstoff- Nanoröhrchen sind.

6. Positive Elektrode nach einem der vorhergehenden Ansprüche, wobei der Schwefel-Kohlenstoff- Verbundstoff eine botryoidale Textur aufweist.

7. Positive Elektrode nach einem der vorhergehenden Ansprüche, wobei eine Klopfdichte des porösen Kohlenstoff-materials 0,07 g/cm$^3$ oder weniger beträgt.

8. Positive Elektrode nach einem der vorhergehenden Ansprüche, wobei die Menge des Schwefels (S) 65 Gew.-% oder mehr und 75 Gew.-% oder weniger beträgt, bezogen auf insgesamt 100 Gew.-% der Positivelektroden-Aktivmaterialschicht.

9. Positive Elektrode, umfassend:

einen Stromabnehmer; und eine Positivelektroden-Aktivmaterialschicht auf mindestens einer Oberfläche des Stromabnehmers,
wobei

- die Positivelektroden-Aktivmaterialschicht einen Schwefel-Kohlenstoff-Verbundstoff und ein Bindemittelpolymer umfasst,
- der Schwefel-Kohlenstoff- Verbundstoff ein poröses Kohlenstoffmaterial und ein Material auf Schwefelbasis umfasst,

das Material auf Schwefelbasis sich auf mindestens einem Teil des porösen Kohlenstoffmaterials befindet,

- eine Menge des Schwefels (S) 65 Gew.-% oder mehr und 90 Gew.-% oder weniger beträgt, bezogen auf insgesamt 100 Gew.-% der Positivelektroden-Aktivmaterialschicht, und

das poröse Kohlenstoffmaterial aus Partikeln gebildet ist und die Partikel eine Partikelformgleichförmigkeit gemäß der folgenden Gleichung 1 von 1,3 bis 1 aufweisen:

Partikelformgleichförmigkeit = durchschnittlicher Durchmesser eines umschriebenen Kreises der Partikel / durchschnittlicher Durchmesser eines eingeschriebenen Kreises der Partikel.    [Gleichung 1]

10. Positive Elektrode nach Anspruch 13, wobei eine Klopfdichte des porösen Kohlenstoffmaterials 0,09 g/cm$^3$ oder weniger beträgt.

11. Positive Elektrode nach einem der vorhergehenden Ansprüche, wobei das poröse Kohlenstoffmaterial durch Zentrifugalmahlen, vorzugsweise unter Verwendung eines Zentrifugalmahlwerks, das mit einer Winkelgeschwindigkeit von 30 rad/s oder mehr und 125 rad/s oder weniger betrieben wird, und Sieben, vorzugsweise mit einem Sieb mit einer Maschenweite von 50 μm oder mehr und 100 μm oder weniger, hergestellt wird.

12. Positive Elektrode nach einem der vorhergehenden Ansprüche, wobei das poröse Kohlenstoffmaterial einen Breitenfaktor (BF) von 4 oder mehr und 7 oder weniger aufweist, wobei der Breitenfaktor das Verhältnis ($D_{90}/D_{10}$) der Partikelgröße $D_{90}$ zu der Partikelgröße $D_{10}$ des porösen Kohlenstoffmaterials ist.

13. Positive Elektrode nach einem der vorhergehenden Ansprüche, wobei der Schwefel-Kohlenstoff- Verbundstoff durch Mischen des porösen Kohlenstoffmaterials und des Materials auf Schwefelbasis und subsequentielles Erhitzen des gemischten porösen Kohlenstoffmaterials und Materials auf Schwefelbasis bei einer Temperatur von 120 °C oder mehr erhältlich ist.

14. Lithium-Schwefel-Batterie, umfassend eine Elektrodenanordnung:
wobei die Elektrodenanordnung die positive Elektrode nach einem der Ansprüche 1 bis 13; eine negative Elektrode; und einen Separator, der zwischen der positiven Elektrode und der negativen Elektrode angeordnet ist; und einen Elektrolyten umfasst.

15. Lithium-Schwefel-Batterie nach Anspruch 14, wobei ein Gewichtsverhältnis (E1/S-Gewichtsverhältnis) des Elektrolyten und Schwefels (S) in dem Schwefel-Kohlenstoff-Verbundstoff in der Lithium-Schwefel-Batterie 3,5 g/g oder weniger beträgt.

16. Lithium-Schwefel-Batterie nach Anspruch 14 oder Anspruch 15, wobei eine Energiedichte der Lithium-Schwefel-Batterie 400 Wh/kg oder mehr beträgt.

**17.** Lithium-Schwefel-Batterie nach Anspruch 14 bis 16, wobei der Elektrolyt ein LiNO$_3$ umfasst.

**18.** Lithium-Schwefel-Batterie nach einem der Ansprüche 14 bis 17, wobei die Lithium-Schwefel-Batterie eine Lithium-Schwefel-Beutelzellenbatterie, eine Lithium-Schwefel-Knopfzellenbatterie oder eine Lithium-Schwefel-Zylinderzellenbatterie ist.


**Revendications**

**1.** Électrode positive, comprenant :

un collecteur de courant ; et une couche de matériau actif d'électrode positive sur au moins une surface du collecteur de courant,
dans laquelle

- la couche de matériau actif d'électrode positive comprend un composite de soufre-carbone et un polymère liant,
- le composite de soufre-carbone comprend un matériau de carbone poreux et un matériau à base de soufre,

le matériau à base de soufre est situé sur au moins une partie du matériau de carbone poreux,

- une quantité du soufre (S) est 65 % en poids ou plus et 90 % en poids ou moins sur la base d'un total de 100 % en poids de la couche de matériau actif d'électrode positive, et
- une porosité de l'électrode positive est supérieure à 80 % en volume

**2.** Électrode positive selon la revendication 1, dans laquelle une densité après tassement du matériau de carbone poreux est 0,09 g/cm$^3$ ou moins.

**3.** Électrode positive selon l'une quelconque des revendications précédentes, dans laquelle le matériau de carbone poreux est formé de particules et les particules ont une uniformité de forme de particule selon l'Équation 1 ci-après de 1,3 ou moins et 1,0 ou plus :

Uniformité de forme de particule = diamètre moyen d'un cercle circonscrit des particules /diamètre moyen d'un cercle inscrit des particules.                                                    [Equation 1]

**4.** Électrode positive selon l'une quelconque des revendications précédentes, dans laquelle la porosité de l'électrode positive est 81 % en volume ou plus et 85 % en volume ou moins.

**5.** Électrode positive selon l'une quelconque des revendications précédentes, dans laquelle le matériau de carbone poreux comprend une structure secondaire de structures primaires agglomérées, dans laquelle les structures primaires sont des nanotubes de carbone.

**6.** Électrode positive selon l'une quelconque des revendications précédentes, dans laquelle le composite de soufre-carbone a une texture botryoïdale.

**7.** Électrode positive selon l'une quelconque des revendications précédentes, dans laquelle une densité après tassement du matériau de carbone poreux est 0,07 g/cm$^3$ ou moins.

**8.** Électrode positive selon l'une quelconque des revendications précédentes, dans laquelle la quantité du soufre (S) est 65 % en poids ou plus et 75 % en poids ou moins sur la base du total de 100 % en poids de la couche de matériau actif d'électrode positive.

**9.** Électrode positive, comprenant :

un collecteur de courant ; et une couche de matériau actif d'électrode positive sur au moins une surface du collecteur de courant,

dans laquelle

- la couche de matériau actif d'électrode positive comprend un composite de soufre-carbone et un polymère liant,
- le composite de soufre-carbone comprend un matériau de carbone poreux et un matériau à base de soufre,

le matériau à base de soufre est situé sur au moins une partie de la surface du matériau de carbone poreux,

- une quantité du soufre (S) est 65 % en poids ou plus et 90 % en poids ou moins sur la base d'un total de 100 % en poids de la couche de matériau actif d'électrode positive, et

le matériau de carbone poreux est formé de particules et les particules ont une uniformité de forme de particule selon l'Équation 1 ci-après de 1,3 à 1 :

Uniformité de forme de particule = diamètre moyen d'un cercle circonscrit de la particule /diamètre moyen d'un cercle inscrit des particules. [Equation 1]

10. Électrode positive selon la revendication 13, dans laquelle une densité après tassement du matériau de carbone poreux est 0,09 g/cm$^3$ ou moins.

11. Électrode positive selon l'une quelconque des revendications précédentes, dans laquelle le matériau de carbone poreux est préparé par broyage centrifuge, de préférence en utilisant un broyeur centrifuge fonctionnant à un vitesse angulaire de 30 rad/s ou plus et 125 rad/s ou moins, et en tamisant, de préférence avec un tamis ayant un maillage de 50 $\mu$m ou plus et de 100 $\mu$m ou moins.

12. Électrode positive selon l'une quelconque des revendications précédentes, dans laquelle le matériau de carbone poreux a un facteur de largeur (BF) de 4 ou plus et de 7 ou moins, dans laquelle le facteur de largeur est le rapport ($D_{90}/D_{10}$) de la taille de particule $D_{90}$ à la taille de particule $D_{1o}$ du matériau de carbone poreux.

13. Électrode positive selon l'une quelconque des revendications précédentes, dans laquelle le composite de soufre-carbone peut être obtenu en mélangeant le matériau de carbone poreux et le matériau à base de soufre et ensuite, en chauffant le matériau de carbone poreux et le matériau à base de soufre mélangés à une température de 120°C ou plus.

14. Batterie au lithium-soufre, comprenant un ensemble électrode :
dans laquelle l'ensemble électrode comprend l'électrode positive selon l'une quelconque des revendications 1 à 13 ; une électrode négative ; et un séparateur interposé entre l'électrode positive et l'électrode négative ; et un électrolyte.

15. Batterie au lithium-soufre selon la revendication 14, dans laquelle un rapport en poids (rapport en poids El/S) de l'électrolyte et du soufre (S) dans le composite de soufre-carbone dans la batterie au lithium-soufre est 3,5 g/g ou moins.

16. Batterie au lithium-soufre selon la revendication 14 ou la revendication 15, dans laquelle un densité d'énergie de la batterie au lithium-soufre est 400 Wh/kg ou plus.

17. Batterie au lithium-soufre selon la revendication 14 à 16, dans laquelle l'électrolyte comprend un LiNO$_3$.

18. Batterie au lithium-soufre selon l'une quelconque des revendications 14 à 17, dans laquelle la batterie au lithium-soufre est une batterie au lithium-soufre à cellule de poche, une batterie au lithium-soufre à cellule bouton ou une batterie au lithium-soufre à cellule cylindrique.

FIG. 1

FIG. 2

FIG. 3

FIG. 4A

FIG. 4B

FIG. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200100962 A
- US 2022367873 A1
- KR 101737217 B1
- WO 2022181447 A1